# EUROPÄISCHE PATENTSCHRIFT

(11) **EP 3 172 630 B1**
(45) Veröffentlichungstag und Bekanntmachung des Hinweises auf die Patenterteilung: **26.08.2020**
(21) Anmeldenummer: 15747358.8
(22) Anmeldetag: 17.07.2015
(51) Int. Cl.: G05B 19/042

(54) **FEHLERTOLERANTES, WARTBARES AUTOMATISIERUNGSSYSTEM**
FAULT-TOLERANT, SERVICEABLE AUTOMATION SYSTEM
SYSTÈME D'AUTOMATISATION TOLÉRANT AUX PANNES ET D'ENTRETIEN FACILE

(30) Priorität: 22.07.2014 AT 505062014
(43) Veröffentlichungstag der Anmeldung: 31.05.2017
(73) Patentinhaber: TTTech Industrial Automation AG, 1040 Wien (AT)
(72) Erfinder: KOPETZ, Hermann, 2500 Baden (AT)
(74) Vertreter: Patentanwaltskanzlei Matschnig & Forsthuber OG
(86) Internationale Anmeldenummer: PCT/AT2015/050170
(87) Internationale Veröffentlichungsnummer: WO 2016/011469

(56) Entgegenhaltungen:
- US-B1- 6 272 386

## Beschreibung

Die Erfindung ein fehlertolerantes, wartbares Automatisierungssystem umfassend zumindest zwei Zentralrechner und eine, vorzugsweise entfernte, Prozessperipherie, wobei die Zentralrechner dazu eingerichtet sind, mit der Prozessperipherie zu kommunizieren und/oder diese zu steuern, wobei
die Zentralrechner fail-silent *Fault-Containment Units* sind und *autonome Austausdteinheiten* darstellen,
wobei einer der zumindest zwei Zentralrechner die Rolle eines *aktiven Zentralrechners* einnimmt und zumindest ein anderer Zentralrechner der zumindest zwei Zentralrechner die Rolle eines *passiven Zentralrechners* einnimmt,
und wobei der aktive Zentralrechner die Kommunikation mit der Prozessperipherie und/oder die Steuerung der Prozessperipherie ausübt,
wobei der aktive Zentralrechner und die Prozessperipherie *zeitgesteuerte Zustandsnachrichten* über Kommunikationskanäle austauschen, vorzugsweise über drahtlose, insbesondere über *lokale drahtlose Kommunikationskanäle*, und zumindest der aktive Zentralrechner den *aktuellen Zustand* der Prozessperipherie speichert,
und wobei der aktive Zentralrechner, vorzugsweise *periodisch*, *eine Lebenszeichennachricht* an den passiven Zentralrechner sendet,
und wobei der passive Zentralrechner das *Eintreffen einer Lebenszeichennachricht* vom aktiven Zentralrechner in einer periodischen *Lebenszeichennachricht* quittiert und durch ein Time-out überwacht, und wobei der passive Zentralrechner bei *Ausbleiben dieser Lebenszeichennachrichten* nach dem *Time-out* die *Rolle des aktiven Zentralrechners übernimmt.*

Weiters betrifft die Erfindung ein fehlertolerantes, wartbares Automatisierungssystem umfassend zumindest zwei Zentralrechner und eine, vorzugsweise entfernte, Prozessperipherie, sowie ein oder mehrere Gatewayrechner, insbesondere eine Vielzahl von Gatewayrechnern, wobei die Zentralrechner fail-silent Fault-Containment Units sind und *autonome Austauscheinheiten* darstellen, und

der eine oder die mehreren Gatewayrechner, insbesondere die Vielzahl von *Gatewayrechnern fail-silent Fault-Containment Units* sind und *autonome Austauscheinheiten* darstellen, wobei

die Zentralrechner und der oder die Gatewayrechner *zeitgesteuerte Zustandsnachrichten* über Kommunikationskanäle austauschen, vorzugsweise über drahtlose, insbesondere über *lokale drahtlose Kommunikationskanäle,* und wobei jeder Gatewayrechner die Verbindung zu der dem Gatewayrechner zugeordneten Prozessperipherie herstellt und den *aktuellen Zustand* der dem Gatewayrechner zugeordneten Prozessperipherie speichert, und
wobei einer der zumindest zwei Zentralrechner die Rolle eines *aktiven Zentralrechners* einnimmt und zumindest ein anderer Zentralrechner der zumindest zwei Zentralrechner die Rolle eines *passiven Zentralrechners* einnimmt, und wobei

der aktive Zentralrechner die *Kontrolle über* den oder *die Gatewayrechner ausübt,*
und wobei der aktive Zentralrechner, vorzugsweise *periodisch, eine Lebenszeichennachricht* an den passiven Zentralrechner sendet,
und wobei der passive Zentralrechner das *Eintreffen einer Lebenszeichennachricht* vom aktiven Zentralrechner in einer periodischen *Lebenszeichennachricht* quittiert und durch ein Time-out überwacht, und wobei der passive Zentralrechner bei *Ausbleiben dieser Lebenszeichennachrichten* nach dem *Time-out* die *Rolle des aktiven Zentralrechners übernimmt.*
Ein Automatisierungssystem mit im Wesentlichen den oben genannten Merkmalen ist aus der US 6,272,386 B1 bekannt.
Das immer besser werdende Preis/Leistungsverhältnis der Computerhardware und die Weiterentwicklung der Kommunikationstechnik hat zur Vision des *Internet-of-Things (IoT)* geführt, die davon ausgeht, dass eine Vielzahl von technischen Geräten kostengünstig an das Internet angeschlossen werden kann und dass durch die direkte Kommunikation dieser Geräte neue Anwendungsfelder erschlossen und ein großer gesellschaftlicher Nutzen realisiert werden können. Beispiele für solche neue Anwendungsfelder sind die kontinuierliche Beobachtung des Gesundheitszustands von Patienten in der Wohnung oder der Intensiv-Station eines Krankenhauses oder der Bereich der Automatisierungstechnik und des Energiemanagements in einem Haushalt.

In diesen neuen Anwendungsfeldern sind neben der geforderten hohen Zuverlässigkeit und den anfänglichen Anschaffungskosten des Computersystems die Kosten der Wartung nach dem Auftreten eines Fehlers von besonderer Bedeutung. In vielen Fällen sind die Kosten für die Fehlersuche und Fehlerbehebung durch einen Spezialisten vergleichbar hoch oder höher als die ursprünglichen Anschaffungskosten der fehlerhaften Computer Hardware.

Es ist eine Aufgabe der Erfindung, ein fehlertolerantes verteiltes Automatisierungssystem anzugeben, das sich durch eine besonders gute Wartbarkeit auszeichnet.

Diese Aufgabe wird mit einem eingangs erwähnten Automatisierungssystem dadurch gelöst, dass erfindungsgemäß der ausgefallene, vorab aktive Zentralrechner *autonom einen Wiederanlauf versucht* und, nach erfolgreichem Wiederanlauf den Nachrichtenverkehr innerhalb eines Clusters, welcher Cluster die Zentralrechner umfasst, beobachtet, um den aktuellen Zustand des Clusters zu erfahren, und wobei er die *Rolle des passiven Zentralrechners übernimmt* und dem nun *aktiven Zentralrechner über, vorzugsweise periodische, Lebenszeichennachrichten mitteilt,* dass er die Rolle des passiven Zentralrechners ausübt und wobei, falls der Wiederanlauf nicht erfolgreich ist, der ausgefallene Zentralrechner dazu eingerichtet ist, einen permanenten Fehler anzuzeigen, z.B. mittels eines Anzeigemittels, etwa in Form einer Kontrolllampe. Weiters wird die oben genannte Aufgabe mit einem eingangs erwähnten Automatisierungssystem gelöst, bei welchem erfindungsgemäß der ausgefallene, vorab aktive Zentralrechner *autonom einen Wiederanlauf versucht* und, nach erfolgreichem Wiederanlauf den Nachrichtenverkehr innerhalb eines Clusters, welcher Cluster die Zentralrechner und den oder die Gatewayrechner umfasst, beobachtet, um den aktuellen Zustand des Clusters zu erfahren, und wobei er die *Rolle des passiven Zentralrechners übernimmt* und dem nun *aktiven Zentralrechner über, vorzugsweise periodische, Lebenszeichennachrichten mitteilt,* dass er die Rolle des passiven Zentralrechners ausübt und wobei, falls der Wiederanlauf nicht erfolgreich ist, der ausgefallene Zentralrechner dazu eingerichtet ist, einen permanenten Fehler anzuzeigen, z.B. mittels eines Anzeigemittels, etwa in Form einer Kontrolllampe.

Die vorliegende Erfindung beschreibt eine fehlertolerante Architektur für ein Automatisierungssystem, das sich durch eine besonders einfache Wartbarkeit auszeichnet. Die wesentlichen Funktionen des Systems bleiben auch nach dem Auftreten eines Fehlers aufrecht und die Identifikation und der Austausch der fehlerhaften Einheit können von einem ungeschulten Laien vorgenommen werden. Im permanenten Fehlerfall eines Bauteils übernimmt ein redundanter Bauteil die Funktion des ausgefallenen Bauteils und meldet den erkannten Ausfall. Ein Laie kann anhand eines Anzeigemittels, z.B. einer ausgefallenen Kontrollleuchte/Kontrolllampe den fehlerhaften Bauteil (z.B. dauerhaft ausgefallenen Zentralrechner) erkennen, und muss auf dessen Platz lediglich einen neuen funktionstüchtigen Bauteil stellen, um die Redundanz wieder herzustellen. Da alle Verbindungen vorzugsweise drahtlos sind und sich der neue Bauteil autonom in die Anwendung integriert, ist keine weitere Wartungshandlung erforderlich.

Einer der Vorteile der vorliegenden Erfindung liegt in dem Aufbau des Automatisierungssystems aus *autonomen replizierten fail-silent FCUs* (Fault Containment Units), die neben der vorgegebenen Funktion auch eine kontinuierliche Selbstanalyse durchführen, transiente Fehlerursachen autonom beheben und die Integration von neuer Hardware autonom realisieren. Bevorzugt wird eine drahtlose Verbindungstechnik verwendet, die es ermöglicht, eine fehlerhafte FCU auszutauschen ohne mechanische Verbindungen lösen zu müssen. Auf jeder fail-silent FCU, die auch eine Austauscheinheit darstellt, ist ein Anzeigemittel angebracht, welches anzeigt, ob diese FCU funktioniert oder ausgetauscht werden muss.

Bei der Prozessperipherie handelt es sich um die Gesamtheit aller zu steuernden Geräte und Anlagen, z.B. eines Hauses, etwa eines Einfamilienhauses, wie z.B. Alarmanlage, Heizung, Rollläden, Beleuchtung, usw. Diese Aufzählung ist rein beispielhaft und nicht anschließend.

Bei einer ersten oben beschriebenen Variante kommuniziert der aktive Zentralrechner direkt mit der Prozessperipherie. Diese Ausführungsform bietet sich dann an, wenn alle Geräte, Anlage etc. der Prozessperipherie mit dem Zentralrechner über ein Standardprotokoll kommunizieren können.

In der Regel liegt allerdings ein solches Standard-Protokoll nicht für alle Geräte, Anlagen etc. der Prozessperipherie vor, in einem solchen Fall ist die zweite Variante, bei welcher die Zentralrechner mit Gatewayrechnern kommunizieren und diese wiederum mit der Prozessperipherie kommunizieren, von Vorteil. Die Gatewayrechner können dabei jeweils mit genau einem Gerät bzw. einer Anlage der Prozessperipherie verbunden sein, es kann aber auch vorgesehen sein, dass ein oder mehrere Gatewayrechner mit zwei oder mehreren Geräten/Anlagen etc. der Prozessperipherie verbunden sind.

In keinem der bekannten Patente [1-3] und der gefundenen Fachliteratur wird die vorgeschlagene Erfindung vorweggenommen.

Bevorzugte Ausführungsformen des erfindungsgemäßen Automatisierungssystems, welche für sich alleine oder in beliebiger Kombination miteinander realisiert sein können, sind im Folgenden beschrieben:
- ein Zentralrechner ist dazu eingerichtet, nach *Power-up* den Nachrichtenverkehr innerhalb des Clusters zu beobachten, um eine *Clusterkennung* zu erfahren, wobei anschließend ein der Clusterkennung zugeordneter Initialisierungszustand von einer *Cloud* oder einem Speichermedium geladen wird, und wobei nach dem erfolgreichen Anlauf des, vorzugsweise neuen, Zentralrechners der Nachrichtenverkehr innerhalb des Clusters beobachtet wird, um den aktuellen Zustand des Clusters zu erfahren und wo der neue Zentralrechner von nun an die *Rolle des passiven Zentralrechners übernimmt* und dem *aktiven Zentralrechner über eine periodische Lebenszeichennachricht mitteilt,* dass er von nun an die Rolle des passiven Zentralrechners ausübt;
- die Zentralrechner und/oder die Gatewayrechner haben Zugriff auf eine globale Zeit;
- jener Zentralrechner, der nach dem Time-out die Rolle des aktiven Zentralrechners übernimmt, übernimmt die Kontrolle über die Prozessperipherie bzw. die Gatewayrechner;
- in den *Lebenszeichennachrichten* der Zentralrechner ist eine eindeutige Kennung des sendenden Zentralrechners enthalten;
- bei gleichzeitigem Power-up von den zumindest zwei Zentralrechnern übernimmt der Zentralrechner mit der kleineren Kennung die Rolle das aktiven Zentralrechners;
- in der Payload der *Cluster-internen Nachrichten* von einem Gatewayrechnern zum Zentralrechner ist ein Datenfeld mit einer *eindeutige Kennung der Cluster Identität* vorhanden;
- ein Zentralrechner tauschtdie Nachrichten mit seiner Umgebung im Cluster, d.h. zumindest mit dem zumindest einen weiteren Zentralrechner und/oder zumindest mit den Gatewayrechnern, über ein Bluetooth Kommunikationssystem aus;
- ein Zentralrechner tauschtdie Nachrichten mit seiner Umgebung im Cluster, d.h. zumindest mit dem zumindest einen weiteren Zentralrechner und/oder zumindest mit den Gatewayrechnem, über ein WiFi Kommunikationssystem aus;
- ein Zentralrechner tauscht die Nachrichten mit seiner Umgebung im Cluster, d.h. zumindest mit dem zumindest einen weiteren Zentralrechner und/oder zumindest mit den Gatewayrechnem, über ein ZigBee Kommunikationssystem aus;
- jeder Zentralrechner verfügt über eine eigene Stromversorgung, vorteilhafterweise mit einem Energiespeicher;
- ein Zentralrechner wird über eine induktive Stromversorgung mit Energie versorgt;
- ein bzw. die ist/sind Gatewayrechner repliziert;
- der Inhalt der im Automatisierungssystem drahtlos übertragenen Nachrichten ist kryptographisch verschlüsselt;

Mit Vorteil ist für ein solches Automatisierungssystem ein Zentralrechner vorgesehen, in welchem ein Arbeitsrechner und ein Monitorrechner enthalten sind, wobei der Monitorrechner die korrekte Funktion des Arbeitsrechners überwacht und im Fehlerfall einen Wiederanlauf des Arbeitsrechners veranlasst.

Vorzugsweise besitzt der Zentralrechner einen Kommunikationskontroller für das WiFi Kommunikationssystem.

Vorzugsweise besitzt der Zentralrechner einen Kommunikationskontroller für das Bluetooth Kommunikationssystem.

Vorzugsweise besitzt der Zentralrechner einen Kommunikationskontroller für das ZigBee Kommunikationssystem.

Vorzugsweise besitzt der Zentralrechner einen Empfänger für ein GPS Signal.

Vorzugsweise besitzt der Zentralrechner einen Empfänger für das DCF77 Signal.

Vorzugsweise befindet sich am Zentralrechner ein Anzeigemittel, beispielsweise in Form einer Kontrolllampe, befindet, welches, beispielsweise durch kontinuierliches Leuchten, anzeigt, dass der Zentralrechner funktionsfähig ist und sich im aktiven Zustand.

Vorzugsweise befindet sich am Zentral rechner ein Anzeigemittel, beispielsweise in Form einer Kontrolllampe, befindet, welches, beispielsweise durch Blinken, anzeigt, dass der Zentralrechner funktionsfähig ist und sich im passiven Zustand.

Vorzugsweise kann der Zentralrechner die Datenstruktur, die seinen Initialisierungszustand beschreibt, aus einer *Cloud* laden.

Vorzugsweise realisiert der Zentralrechner über eine SIM Karte eine drahtlose Datenverbindung zum Telefonnetz.

Vorzugsweise kann der Zentralrechner die Datenstruktur, die seinen Initialisierungszustand beschreibt, aus einem USB Speicher laden.

Mit Vorteil ist für ein solches Automatisierungssystem ein Gatewayrechner vorgesehen, welcher dazu eingerichtet ist, eine periodische Zustandsnachricht an die Zentralrechner zu senden, deren Inhalt den aktuellen Zustand der dem Gatewayrechner zugeordneten Prozessperipherie anzeigt.

Vorzugsweise ist der Gatewayrechner dazu eingerichtet, die Datenstruktur, die seinen Initialisierungszustand beschreibt, aus einer *Cloud* zu laden.

Vorzugsweise ist der Gatewayrechner dazu eingerichtet, über eine SIM Karte eine drahtlose Datenverbindung zum Telefonnetz zu realisieren.

Vorzugsweise wird der Gatewayrechner über eine induktive Stromversorgung mit Energie versorgt.

Vorzugsweise formt der Gatewayrechner Ereignisnachrichten von der Prozessperipherie in Zustandsnachrichten für den Zentralrechner und Zustandsnachrichten von dem Zentralrechner in Ereignisnachrichten zur Prozessperipherie um.

Vorzugsweise weist der Gatewayrechner ein Anzeigemittel, etwa in Form einer Kontrolllampe, zur Anzeige der Funktionsfähigkeit des Gatewayrechners auf, wobei die Funktionsfähigkeit z.B. in Form eines kontinuierlichen Leuchtens der Kontrolllampe angezeigt wird.

### Begriffserklärungen

Im folgenden Abschnitt werden neuen Begriffe erklärt, die in der Beschreibung der Erfindung zur Anwendung gelangen und die über die Standardbegriffe in der Echtzeitverarbeitung hinausgehen, wie sie z.B. im Lehrbuch [8] verwendet werden.

Unter dem Begriff *Cluster* wird die Gesamtheit der Zentralrechner und gegebenenfalls der Gatewayrechner verstanden, welche die Zentrale des Automatisierungssystems bilden. Diese Zentralrechner und gegebenenfalls Gatewayrechner befinden sich typischerweise in räumlicher Nähe zueinander.

Ein Cluster hat eine *eindeutige Kennung,* wenn dem Cluster ein Bitvektor zugewiesen ist, aus dem die physikalische Identität des Clusters hervorgeht.

Ein *Zentralrechner* ist ein Computer mit einem Speicher, in dem die Anwendungsprogramme des Automatisierungssystems ablaufen und die Daten des Automatisierungssystems gespeichert sind.

Ein *Gatewayrechner* ist ein Computer, der die Verbindung zwischen dem Cluster und der - typischerweise entfernt angeordneten - Prozessperipherie herstellt und der den Zustand der Prozessperipherie speichert. In dem Fall, dass die Zentralrechner direkt mit der Prozessperipherie kommunizieren, ist der Zustand der Prozessperipherie in zumindest einem oder mehreren der Zentralrechner, vorzugsweise in dem aktiven Zentralrechner gespeichert.

Die einem *Gatewayrechner (oder einem Zentralrechner) zugeordnete Prozessperipherie* umfasst die Gesamtheit der *Sensoren,* die von dem Gatewayrechner (bzw. dem Zentralrechner) ausgelesen und die Gesamtheit der *Aktuatoren,* denen der Gatewayrechner (bzw. der Zentralrechner) einen Sollwert vorgeben kann. Die Verbindung zwischen einem Gatewayrechner (bzw. Zentralrechner) und der dem Gatewayrechner (bzw. Zentralrechner) zugeordneten Prozessperipherie kann über einen drahtgebundenen oder drahtlosen Kommunikationskanal erfolgen. Ein Zentralrechner ist *aktiv,* wenn er die Kontrolle *über die Gatewayrechner* ausübt, d.h. wenn er Sollwerte für die den *Gatewayrechnern zugeordnete Prozessperipherie* vorgibt, bzw. wenn er die Kontrolle über die bzw. Steuerung der Prozessperipherie ausübt.

Ein Zentralrechner ist *passiv,* wenn er keine Kontrolle über die Gatewayrechner ausübt (bzw. keine Kontrolle/Steuerung über die Prozessperipherie ausübt).

Ein Rechner hat eine *eindeutige Kennung,* wenn dem Rechner ein Bitvektor zugewiesen ist, aus dem die physikalische Identität des Rechners hervorgeht.

Eine *fail-silent FCU* ist ein Rechner, der entweder richtig funktioniert oder der keine Ausgabe tätig, d.h. im Fehlerfall ruhig ist. Die fail-silent Eigenschaft kann durch den bekannten Einsatz von Redundanz erreicht werden [4]. Ein Ausfall einer fail-silent FCU kann nur im Zeitbereich erkannt werden. Im Rahmen der vorliegenden Erfindung ist ein fail-silent Rechner auch eine *Austauscheinheit*

Eine Rechner ist eine *autonome Austauscheinheit,* wenn der Rechner im Feld ausgetauscht werden kann und folgende Funktionen selbsttätig (d.h. ohne einen menschlichen Eingriff) durchführen kann:
- Erkennung eines Fehlers
- Entscheidung, ob die Fehlerursache transient oder permanent ist
- Behebung der Folgen eines transienten Fehlers
- Laden des Initialisierungszustandes
- Eingliederung in den laufenden Betrieb.

Der *Initialisierungszustand eines Rechners* ist eine statische Datenstruktur, die die Gesamtheit der Programme und Initialisierungsdaten umfasst, die in der Hardware des Rechners vorhanden sein muss, ehe der Rechner mit der Ausführung der ihm zugewiesenen Funktionen beginnen kann.

Der *aktuelle Zustand* eines Rechners umfasst alle dynamischen Daten aus der Vergangenheit, die für das zukünftige Verhalten des Rechners von Bedeutung sind (siehe [8], p. 84)

Unter der *Payload einer Nachricht* wird der Bitvektor verstanden, der im Datenfeld der Nachricht transportiert wird.

Eine *zeitgesteuerte Zustandsnachricht* ist eine periodische Nachricht, die zu a priori bekannten Zeitpunkten gesendet wird, wobei beim Empfänger eine neue Version der Nachricht die alte Version überschreibt und beim Senden die Nachricht nicht konsumiert wird ([8], S.91).

Eine *Lebenszeichennachricht* ist eine periodische Nachricht, die von einem Rechner gesendet wird und aus deren Inhalt sich erkennen lässt, ob der Rechner funktionstüchtig ist.

Bluetooth ist ein Industriestandard (IEEE Standard 802.15.1) für die Datenübertragung zwischen Geräten über kurze Distanz per Funktechnik (WPAN) mit einer Bandbreite bis zu 2.1 Mbit/Sekunde.

WiFi ist ein Industriestandard (IEEE Standard 802.11) für die Datenübertragung zwischen Geräten über mittlere Distanz per Funktechnik mit einer Bandbreite bis zu 150 Mbit/Sekunde.

Das GPS Signal ist ein weltweit verfügbares Satellitensignal, welches das Fortschreiten der physikalischen Zeit mit einer Genauigkeit von besser als 100 nsec übermittelt.

Das DCF77 Signal ist ein in Europa verfügbares Funksignal, welches das Fortschreiten der physikalischen Zeit mit einer Genauigkeit von circa 1 msec übermittelt.

NTP (Network Time Protokoll) ist ein Protokoll, das die Zeit mit einer Genauigkeit von circa 1 msec über das Internet verteilt

Eine *induktive Stromversorgung* ist eine drahtlose Energieversorgung, die auf dem bekannten Prinzip der Induktion basiert.

Im Folgenden ist die Erfindung an Hand der Zeichnung näher erörtert. In dieser zeigt
- Fig. 1: ein Cluster eines erfindungsgemäßen Automatisierungssystems, und
- Fig. 2: den inneren Aufbau eines Zentralrechners.

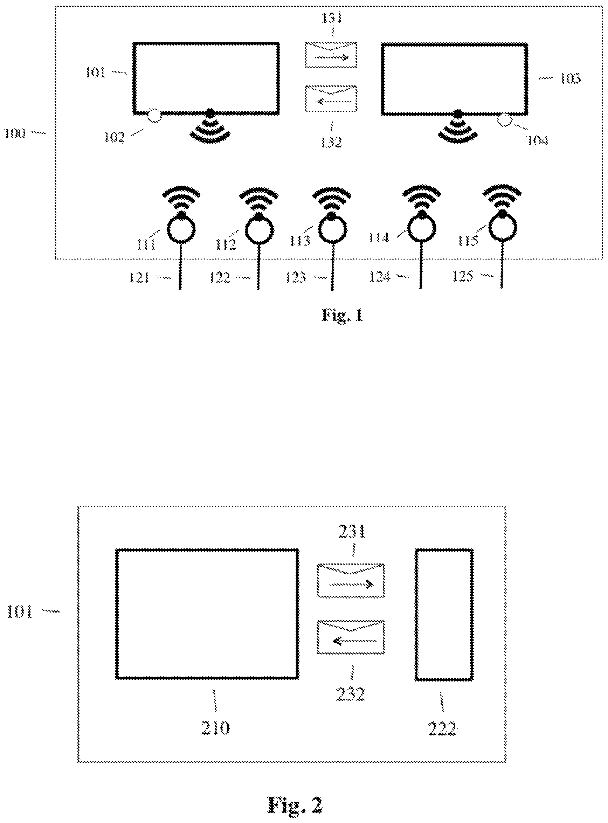

Im Folgenden wird eine der vielen möglichen konkreten Realisierungen der Erfindung an Hand von Figur 1 beschrieben. Als Beispiel wird ein IoT (Internet of Things) System zur Steuerung der Geräte in einem Einfamilienhaus herangezogen.

In Fig. 1 ein erfindungsgemäßes Automatisierungssystem gezeigt. Dieses umfasst ein Cluster, welches durch den Inhalt des Rechtecks 100 dargestellt. In dem Cluster befinden sich die beiden Zentralrechner 101 und 103 und die fünf Gatewayrechner 111, 112, 113, 114 und 115.

Die Gatewayrechner 111, 112, 113, 114 und 115 stellen die Verbindung zwischen dem Cluster 100 und der proprietären Prozessperipherie (nicht dargestellt) über, beispielsweise nicht standardisierte, Funkverbindungen oder leitungsgebundene Verbindungen her. Die Gatewayrechner senden periodische *Zustandsnachrichten* an die Zentralrechner, deren Inhalt den aktuellen Zustand der einem Gatewayrechner zugeordneten Prozessperipherie anzeigt. Um den Kommunikationsaufwand zwischen dem Gatewayrechner und der Prozessperipherie zu reduzieren, kann es angebracht sein, dass der Gatewayrechner Ereignisnachrichten *(event messages,* S. [8], S.90) von der Prozessperipherie in Zustandsnachrichten für den Zentralrechner und Zustandsnachrichten von dem Zentralrechner in Ereignisnachrichten zur Prozessperipherie umformt.

Im konkreten Beispiel wird angenommen, dass folgende Geräte des Automatisierungssystems die Prozessperipherie bilden und an das Cluster angeschlossen sind:

| **Gerät** | **Gatewayrechner** | **Verbindung** |
|---|---|---|
| Alarmanlage | 111 | 121 |
| Heizung | 112 | 122 |
| Rollläden | 113 | 123 |
| Beleuchtung | 114 | 124 |
| Telefonnetz über SIM Karte | 115 | 125 |

Die Zentralrechner und die Gatewayrechner kommunizieren mittels Nachrichten über ein drahtloses Kommunikationssystem, z.B. über *Bluetooth* oder *WiFi.* Da diese Nachrichten drahtlos ausgetauscht werden, kann sowohl der Zentralrechner 101 wie auch der Zentralrechner 103 die Kontrolle über die Prozessperipherie ausüben.

Es ist vorteilhaft, den Inhalt der Nachrichten, die *Payload,* kryptographisch zu verschlüsseln.

In der *Payload* der *Cluster-internen Nachrichten* von einem Gatewayrechner zum Zentralrechner ist ein Datenfeld mit einer *eindeutigen Kennung der Cluster Identität* vorhanden.

Vorteilhafterweise verfügt jeder Zentralrechner über eine eigene unabhängige Stromversorgung mit einem Energiespeicher, die über eine induktive Kopplung die Energie an den Zentralrechner berührungsfrei überträgt. Da alle Verbindungen eines Zentralrechners zu seiner Umgebung ohne direkte mechanische Kontakte realisiert werden können, kann der Austausch eines defekten Zentralrechners lediglich durch das Hinstellen eines neuen Zentralrechners erfolgen.

Im Falle, dass die Prozessperipherie vom Zentralrechner über Standardprotokolle, wie z.B. dem WiFi Protokoll, direkt angesprochen werden kann, ist die Einschaltung eines Gatewayrechners nicht erforderlich.

Nach *Power-up* begeben sich beide redundante Zentralrechner 101 und 103 in den Zustand *passiv,* lassen die Kontrolllampen 102 und 104 blinken, und senden je eine Lebenszeichennachricht 131 und 132, in der die eindeutige Kennung des Zentralrechners enthalten ist, an den anderen Zentralrechner. Die exakte Uhrzeit wird von dem NTP Protokoll [5], dem DCF 77 Signal oder dem GPS Signal übernommen. Die Zentralrechner vergleichen die beiden Kennungen. Der Zentralrechner mit der kleineren Kennung begibt sich in den Zustand *aktiv* und übernimmt die Kontrolle über die Gatewayrechner. Der aktive Zentralrechner, z.B. der Zentralrechner 101, schaltet nun seine Kontrolllampe 102 dauern ein um anzuzeigen, dass er die Kontrolle im Cluster 100 ausübt. Der andere Zentralrechner, der Zentralrechner 102 verbleibt blinkend im Zustand passiv.

Im folgenden Abschnitt wird angenommen, dass der Zentralrechner 101 im Zustand *aktiv* ist. Der innere Aufbau des Zentralrechners 101 ist in Fig. 2 skizziert. Der Zentralrechner besteht aus einem Arbeitsrechner 210 und einem Monitorrechner 222, die leitungsgebundene Nachrichten 231 und 232 austauschen. Der Monitorrechner 222 überprüft die vom Arbeitsrechner 210 erhaltenen Ergebnisnachrichten 231. Wenn der Monitorrechner 222 einen Fehler feststellt, so wird vom Monitorrechner 222 die Hardware des Arbeitsrechners 210 mittels der Nachricht 232 in den *Reset* Zustand gezwungen und das Senden der Lebenszeichennachricht 131 (Fig. 1) unterbrochen. Der zu diesem Zeitpunkt passive Zentralrechner 103 stellt das Ausbleiben der Lebenszeichennachricht 131 durch ein Timeout fest und wechselt in den Zustand aktiv. Da die Kommunikation zwischen dem Arbeitsrechnern 101 und 103 und den *Gatewayrechnern* 111, 112, 113, 114 und 115 über *zeitgesteuerte Zustandsnachrichten* erfolgt, kann der Arbeitsrechner 103 die Kontrolle über das Cluster 100 ohne Störung des Betriebes übernehmen.

Der in den Zustand Reset gezwungene Zentralrechner 101 versucht nun autonom einen Wiederanlauf. Da die häufigsten Fehlerursachen transienter Natur sind, wird der Wiederanalauf in den meisten Fällen erfolgreich sein. (Bei einer transienten Fehlerursache wird durch den Fehler eine Datenstruktur innerhalb des Zentralrechners 101 korrumpiert, die Hardware des Zentralrechners 101 bleibt aber unversehrt.) In der Folge beobachtet der Zentralrechner 101 den Nachrichtenverkehr innerhalb des Clusters, um den aktuellen Zustand des Clusters zu erfahren und übernimmt von nun an die Rolle des passiven Zentralrechners. Er teilt nun dem aktiven Zentralrechner 103 über die periodische Lebenszeichennachricht 131 mit, dass der Zentralrechner 101 von nun an die Rolle des passiven Zentralrechners ausübt

Falls der Wiederanlauf nicht erfolgreich ist, wird vom Monitorrechner 222 die Kontrolllampe 102 des fehlerhaften Zentralrechners abgeschaltet, um einen permanenten Fehler im Zentralrechner 101 anzuzeigen. Um die Redundanz wieder herzustellen, muss der fehlerhafte Zentralrechner 101 durch einen neuen Zentralrechner ersetzt werden. Dies geschieht beispielsweise durch einen Benutzer des Automatisierungssystems. Nach Eintreffen und Aufstellen des neuen *Zentralrechners* 101 führt der neue Zentralrechner das *Power-up* durch und beobachtet den Nachrichtenverkehr innerhalb des Clusters, um die eindeutige *Clusterkennung* zu erfahren. Die Clusterkennung ist der Initialisierungszustand (das sind die Programme und Daten, die in einen neuen Zentralrechner geladen werden müssen, damit er seine anlagenspezifische Funktion durchführen kann) des Zentralrechners in dieser Anlage bzw. in diesem Automatisierungssystem. Der identifizierte Initialisierungszustand wird nun von einer *Cloud o*der einem Speichermedium (z.B. einem USB Speicher) geladen. Nach dem erfolgreichen Wiederanlauf des neuen Zentralrechners 101 mit dem relevanten Initialisierungszustand wird der Nachrichtenverkehr innerhalb des Clusters beobachtet, um den aktuellen Zustand des Clusters 100 zu erfahren. Von nun an übernimmt der neue Zentralrechner 101 die Rolle des passiven Zentralrechners und teilt dem aktiven Zentralrechner 103 über periodische Lebenszeichennachrichten 131 mit, dass der Zentralrechner 101 von nun an die Rolle des passiven Zentralrechners ausübt.

Erfindungsgemäß können in einem Cluster 100 neben einem aktiven Zentralrechner auch mehr als ein passiver Zentralrechner vorhanden sein. Es ist auch möglich, die Gatewayrechner zu replizieren.

Die Verbindung zum Telefonnetz kann entweder über den Gatewayrechner 115 oder direkt über die Zentralrechner erfolgen. Falls Redundanz gefordert wird, erfolgt die Verbindung vorzugsweise über die Zentralrechner, z.B. mit je einer SIM Karte in den Zentralrechnem.

Die Mensch/Maschinenkommunikatiun zwischen dem Automatisierungssystem (dem Zentralrechner) und einem Benutzer erfolgt vorzugsweise über einen Tablet Computer oder über ein Smart Phone.

Das vorliegende Beispiel zeigt eine der vielen möglichen Anwendungen des erfindungsgemäßen fehlertoleranten wartbaren Automatisierungssystems.

Durch die bevorzugte Einführung einer standardisierten zeitgesteuerten drahtlosen Nachrichtenschnittstelle zwischen den Zentralrechnern und den *Gatewayrechnern* und die physikalische Trennung der Gatewayrechner, welche die Verbindung zu speziellen Geräten und zur proprietären Prozessperipherie herstellen, ist es möglich, die Hardware des Zentralrechners zu standardisieren. Ein solches Standardprodukt, das in großer Stückzahl hergestellt wird, kann entsprechend kostengünstig produziert werden.

### Zitierte Literatur:

[1] US Patent 8,312,318. Graham et al. System and Methods of high availability Cluster Environment Failover Protection. Granted Nov. 13, 2012.
[2] US Patent 8,745,467. Gale et al. System and Method for Fault-Tolerant Computing Using Generic Hardware. Granted June 3, 2014.
[3] US Patent Application 20030135790. Pignol, M. Computer System that tolerates Transient Errors and Method for Management in a System of this Type. July 17, 2003.
[4] Mahmud, A. Concurrent Error Detection Using Watchdog Processors-A Survey. IEEE Trans. on Computers. Vol 37. No. 2, February 1988
[5] NTP. Network Time Protocol. Wikipedia, 2014.
[6] IEEE Standard 802.11. Wireless LANs. URL: standards.ieee.org.
[7] IEEE Standard 802.15.1. Bluetooth. URL: standards.ieee.org.
[8] Kopetz, H. Real-Time Systems, Design Principles for Distributed Embedded Applications. Springer Verlag. 2011.

## Patentansprüche

1. Fehlertolerantes, wartbares Automatisierungssystem umfassend zumindest zwei Zentralrechner (101, 103) und eine, vorzugsweise entfernte, Prozessperipherie, wobei die Zentralrechner (101, 103) dazu eingerichtet sind, mit der Prozessperipherie zu kommunizieren und/oder diese zu steuern, wobei die Zentralrechner (101, 103) fail-silent *Fault-Containment Units* sind und *autonome Austauscheinheiten* darstellen,
wobei einer der zumindest zwei Zentralrechner die Rolle eines *aktiven Zentralrechners* einnimmt und zumindest ein anderer Zentralrechner der zumindest zwei Zentralrechner die Rolle eines *passiven Zentralrechners* einnimmt,
und wobei der aktive Zentralrechner die Kommunikation mit der Prozessperipherie bzw. die Steuerung der Prozessperipherie ausübt,
wobei der aktive Zentralrechner und die Prozessperipherie *zeitgesteuerte Zustandsnachrichten* über Kommunikationskanäle austauschen, vorzugsweise über drahtlose, insbesondere über *lokale drahtlose Kommunikationskanäle,* und zumindest der aktive Zentralrechner den *aktuellen Zustand* der Prozessperipherie speichert,
und wobei der aktive Zentralrechner, vorzugsweise *periodisch, eine Lebenszeichenachricht* an den passiven Zentralrechner sendet,
und wobei der passive Zentralrechner das *Eintreffen einer Lebenszeichennachricht* vom aktiven Zentralrechner in einer periodischen *Lebenszeichennachricht* (*131*) quittiert und durch ein Time-out überwacht, und wobei der passive Zentralrechner bei *Ausbleiben dieser Lebenszeichennachrichten* nach dem *Time-out* die *Rolle des aktiven Zentralrechners übernimmt,*
**dadurch gekennzeichnet, dass**
der ausgefallene, vorab aktive Zentralrechner *autonom einen Wiederanlauf versucht* und, nach erfolgreichem Wiederanlauf den Nachrichtenverkehr innerhalb eines Clusters, welcher Cluster die Zentralrechner umfasst, beobachtet, um den aktuellen Zustand des Clusters zu erfahren, und wobei er die *Rolle des passiven Zentralrechners übernimmt* und dem nun *aktiven Zentralrechner über, vorzugsweise periodische, Lebenszeichennachricht mitteilt,* dass er die Rolle des passiven Zentralrechners ausübt und wobei, falls der Wiederanlauf nicht erfolgreich ist, der ausgefallene Zentralrechner dazu eingerichtet ist, einen permanenten Fehler anzuzeigen, z.B. mittels eines Anzeigemittels, etwa in Form einer Kontrolllampe (102,104).

2. Fehlertolerantes, wartbares Automatisierungssystem umfassend zumindest zwei Zentralrechner (101, 103) und eine, vorzugsweise entfernte, Prozessperipherie, sowie ein oder mehrere Gatewayrechner (111, 112, 113, 114, 115), insbesondere eine Vielzahl von Gatewayrechnern, wobei die Zentralrechner (101, 103) fail-silent *Fault-Containment Units* sind und *autonome Austauscheinheiten* darstellen, und
der eine oder die mehreren Gatewayrechner, insbesondere die Vielzahl von *Gatewayrechnern* (111, 112, 113, 114, 115) *fail-silent* Fault-Containment Units sind und *autonome Austauscheinheiten* darstellen, wobei
die Zentralrechner (101, 103) und der oder die Gatewayrechner (111, 112, 113, 114, 115) *zeitgesteuerte Zustandsnachrichten* über Kommunikationskanäle austauschen, vorzugsweise über drahtlose, insbesondere über *lokale drahtlose Kommunikationskanäle,* und wobei jeder Gatewayrechner die Verbindung zu der dem Gatewayrechner zugeordneten Prozessperipherie herstellt und den *aktuellen Zustand* der dem Gatewayrechner zugeordneten Prozessperipherie speichert, und
wobei einer der zumindest zwei Zentralrechner die Rolle eines *aktiven Zentralrechners* einnimmt und zumindest ein anderer Zentralrechner der zumindest zwei Zentralrechner die Rolle eines *passiven Zentralrechners* einnimmt, und wobei
der aktive Zentralrechner die *Kontrolle* über den oder *die Gatewayrechner ausübt,* und wobei der aktive Zentralrechner, vorzugsweise *periodisch, eine Lebenszeichennachricht* an den passiven Zentralrechner sendet,
und wobei der passive Zentralrechner das *Eintreffen einer Lebenszeichennachricht* vom aktiven Zentralrechner in einer periodischen *Lebenszeichennachricht* (131) quittiert und durch ein Time-out überwacht, und wobei der passive Zentralrechner bei *Ausbleiben dieser Lebenszeichennachrichten* nach dem *Time-out* die *Rolle des aktiven Zentralrechners übernimmt,*
**dadurch gekennzeichnet, dass**
der ausgefallene, vorab aktive Zentralrechner *autonom einen Wiederanlauf versucht* und, nach erfolgreichem Wiederanlauf den Nachrichtenverkehr innerhalb eines Clusters, welcher Cluster die Zentralrechner und den oder die Gatewayrechner umfasst, beobachtet, um den aktuellen Zu-stand des Clusters zu erfahren, und wobei er die *Rolle des passiven Zentralrechners übernimmt* und dem nun *aktiven Zentralrechner über, vorzugsweise periodische, Lebenszeichennachrichten mitteilt,* dass er die Rolle des passiven Zentralrechners ausübt und wobei, falls der Wiederanlauf nicht erfolgreich ist, der ausgefallene Zentralrechner dazu eingerichtet ist, einen permanenten Fehler anzuzeigen, z.B. mittels eines Anzeigemittels, etwa in Form einer Kontrolllampe (102, 104).

3. Automatisierungssystem nach Anspruch 1 oder 2, **dadurch gekennzeichnet, dass** ein Zentralrechner (101, 103) dazu eingerichtet ist, nach *Power-up* den Nachrichtenverkehr innerhalb des Clusters zu beobachten, um eine *Clusterkennung* zu erfahren, wobei anschließend ein der Clusterkennung zugeordneter Initialisierungszustand von einer *Cloud* oder einem Speichermedium geladen wird, und wobei nach dem erfolgreichen Anlauf des, vorzugsweise neuen, Zentralrechners der Nachrichtenverkehr innerhalb des Clusters beobachtet wird, um den aktuellen Zustand des Clusters zu erfahren und wo der neue Zentralrechner von nun an die *Rolle des passiven Zentralrechners übernimmt* und dem *aktiven Zentralrechner über eine periodische Lebenszeichennachricht mitteilt,* dass er von nun an die Rolle des passiven Zentralrechners ausübt.

4. Automatisierungssystem nach einem der Ansprüche 1 bis 3, **dadurch gekennzeichnet, dass** die Zentralrechner (101, 103) und/oder der oder die die Gatewayrechner (111, 112, 113, 114, 115) griff auf eine globale Zeit haben.

5. Automatisierungssystem nach einem der Ansprüche 1 bis 4, **dadurch gekennzeichnet, dass** jener Zentralrechner, der nach dem Time-out die Rolle des aktiven Zentralrechners übernimmt, die Kontrolle über die Prozessperipherie bzw. den oder die die Gatewayrechner übernimmt.

6. Automatisierungssystem nach einem der Ansprüche 1 bis 5, **dadurch gekennzeichnet, dass** in den Lebenszeichennachrichten der Zentralrechner (101, 103) eine eindeutige Kennung des sendenden Zentralrechners enthalten ist.

7. Automatisierungssystem nach einem der Ansprüche 1 bis 6, **dadurch gekennzeichnet, dass** das bei gleichzeitigem Power-up von den zumindest zwei Zentralrechnern (101, 103) der Zentralrechner mit der kleineren Kennung die Rolle das aktiven Zentralrechners übernimmt.

8. Automatisierungssystem nach einem der Ansprüche 2 bis 7, **dadurch gekennzeichnet, dass** in der Payload der *Cluster-intemen Nachrichten* von einem *Gatewayrechner* (111, 112, 113, 114, 115) zum Zentralrechner (101, 103) ein Datenfeld mit einer *eindeutige Kennung der Cluster Identität* vorhanden ist.

9. Automatisierungssystem nach einem der Ansprüche 1 bis 8, **dadurch gekennzeichnet, dass** ein Zentralrechner die Nachrichten mit seiner Umgebung im Cluster, d.h. zumindest mit dem zumindest einen weiteren Zentralrechner und/oder zumindest mit dem oder den Gatewayrechnern (111, 112, 113, 114, 115), über ein Bluetooth Kommunikationssystem austauscht.

10. Automatisierungssystem nach einem der Ansprüche 1 bis 9, **dadurch gekennzeichnet, dass** ein Zentralrechner (101, 103) die Nachrichten mit seiner Umgebung im Cluster, d.h. zumindest mit dem zumindest einen weiteren Zentralrechner und/oder zumindest mit dem oder den Ga-tewayrechnern (111, 112, 113, 114, 115), über ein WiFi Kommunikationssystem austauscht.

11. Automatisierungssystem nach einem der Ansprüche 1 bis 10, **dadurch gekennzeichnet, dass** ein Zentralrechner (101, 103) die Nachrichten mit seiner Umgebung im Cluster, d.h. zumindest mit dem zumindest einen weiteren Zentralrechner und/oder zumindest mit dem oder den *Gatewayrechnern* (111, 112, 113, 114, 115), über ein ZigBee Kommunikationssystem austauscht.

12. Automatisierungssystem nach einem der Ansprüche 1 bis 11, **dadurch gekennzeichnet, dass** jeder Zentralrechner (101, 103) über eine eigene Stromversorgung, vorteilhafterweise mit einem Energiespeicher, verfügt.

13. Automatisierungssystem nach einem der Ansprüche 1 bis 12, **dadurch gekennzeichnet, dass** ein Zentralrechner (101, 103) über eine induktive Stromversorgung mit Energie versorgt wird.

14. Automatisierungssystem nach einem der Ansprüche 2 bis 13, **dadurch gekennzeichnet, dass** ein bzw. die Gatewayrechner (111, 112, 113, 114, 115) repliziert ist/sind.

15. Automatisierungssystem nach einem der Ansprüche 1 bis 14, **dadurch gekennzeichnet, dass** der Inhalt der im Automatisierungssystem drahtlos übertragenen Nachrichten kryptographisch verschlüsselt ist.

## Claims

1. Fault-tolerant, maintainable automation system comprising at least two central computers (101, 103) and a, preferably remote, process periphery, wherein the central computers (101, 103) are arranged to communicate with and/or control the process periphery, wherein the central computers (101, 103) are fail-silent *fault-containment units* and constitute *autonomous exchange units,*
wherein one of the at least two central computers assumes the role of an *active central computer* and at least one other central computer of the at least two central computers assumes the role of a *passive central computer,*
and wherein the active central computer carries out the communication with the process periphery or the control of the process periphery,
wherein the active central computer and the process periphery exchange *time-controlled status messages* via communication channels, preferably via wireless, in particular via *local wireless communication channels,* and at least the active central computer stores the *current status* of the process periphery,
and wherein the active central computer sends, preferably *periodically,* a *life sign message* to the passive central computer,
and wherein the passive central computer acknowledges the *arrival of a life sign message* in a periodic *life sign message* (131) and monitors it through a time-out, and wherein the passive central computer *takes over the role of the active central computer* in case of *absence of these life sign messages* after the *time-out,*
**characterised in that**
the failed, previously active central computer *autonomously attempts a restart* and, after a successful restart, observes the message traffic within a cluster, which cluster comprises the central computers, in order to learn the current state of the cluster, and wherein it *takes over the role of the passive central computer* and sends a message to the now *active central computer via, preferably periodic, life sign messages,* that it is performing the role of the passive central computer, and wherein, if the restart is unsuccessful, the failed central computer is configured to indicate a permanent error, e.g. by means of an indicator means such as a control lamp (102, 104).

2. Fault-tolerant, maintainable automation system comprising at least two central computers (101, 103) and a, preferably remote, process periphery, as well as one or more gateway computers (111, 112, 113, 114, 115), in particular a plurality of gateway computers, wherein the central computers (101, 103) are fail-silent *fault-containment units* and constitute *autonomous exchange units,* and
the one or more gateway computers, in particular the plurality of *gateway computers* (111, 112, 113, 114, 115) are *fail-silent* fault-containment units and constitute *autonomous exchange units,* wherein
the central computer (101, 103) and the gateway computer(s) (111, 112, 113, 114, 115) exchange *time-controlled status messages* via communication channels, preferably via wireless, in particular *local wireless communication channels,* and wherein each gateway computer establishes the connection to the process periphery assigned to the gateway computer and stores the *current status* of the process periphery assigned to the gateway computer, and wherein one of the at least two central computers assumes the role of an *active central computer* and at least one other central computer of the at least two central computers assumes the role of a *passive central computer,* and wherein
the active central computer exercises control over the gateway computer(s),
and wherein the active central computer sends, preferably *periodically,* a *life sign message* to the passive central computer,
and wherein the passive central computer acknowledges the *arrival of a life sign message* from the active central computer in a periodic *life sign message* (131) and monitors it through a time-out, and wherein the passive central computer *assumes the role of the active central computer* in case of *absence of these life sign messages* after the *time-out,*
**characterised in that**
the failed, previously active central computer *autonomously attempts a restart* and, after successful restart, observes the message traffic within a cluster, which cluster contains the central computer and the gateway computer(s), in order to learn the current state of the cluster, and wherein it assumes the *role of the passive central computer* and informs the now *active central computer via, preferably periodic, life sign messages,* that it is performing the role of the passive central computer, and wherein, if the restart is unsuccessful, the failed central computer is configured to indicate a permanent error, e.g. by means of an indicating means such as a control lamp (102, 104).

3. An automation system according to claim 1 or 2, **characterised in that** a central computer (101, 103) is configured to observe, after *power-up,* the message traffic within the cluster in order to learn a *cluster identifier,* wherein subsequently an initialization state associated with the cluster identifier is loaded from a *cloud* or a storage medium, and wherein after successful start-up of the, preferably new, central computer, the message traffic within the cluster is monitored in order to learn the current state of the cluster and where the new central computer, form now on, *takes over the role of the passive central computer* and *informs the active central computer via a periodic life sign message* that it will, from now on, take over the role of the passive central computer.

4. Automation system according to any one of claims 1 to 3, **characterised in that** the central computer (101, 103) and/or the gateway computer(s) (111,112, 113, 114, 115) have access to a global time.

5. Automation system according to any one of claims 1 to 4, **characterised in that** the central computer which takes over the role of the active central computer after the time-out takes over control of the process periphery or the gateway computer(s).

6. Automation system according to any one of claims 1 to 5, **characterised in that** the life sign messages of the central computer (101, 103) contain a unique identification of the sending central computer.

7. Automation system according to any one of claims 1 to 6, **characterised in that**, when the at least two central computers (101, 103) are powered up simultaneously, the central computer with the smaller identifier takes over the role of the active central computer.

8. Automation system according to any one of claims 2 to 7, **characterised in that** in the payload of the *cluster-internal messages* from a gateway computer (111, 112, 113, 114, 115) to the central computer (101, 103) there is a data field comprising a *unique identifier of the cluster identity.*

9. Automation system according to any one of claims 1 to 8, **characterised in that** a central computer exchanges the messages with its environment in the cluster, i.e. at least with the at least one further central computer and/or at least with the gateway computer(s) (111, 112, 113, 114, 115), via a Bluetooth communication system.

10. Automation system according to any one of claims 1 to 9, **characterised in that** a central computer (101, 103) exchanges the messages with its environment in the cluster, i.e. at least with the at least one further central computer and/or at least with the gateway computer(s) (111, 112, 113, 114, 115), via a WiFi communication system.

11. Automation system according to any one of claims 1 to 10, **characterised in that** a central computer (101, 103) exchanges the messages with its environment in the cluster, i.e. at least with the at least one further central computer and/or at least with the gateway computer(s) (111, 112, 113; 114, 115), via a ZigBee communication system.

12. Automation system according to any one of claims 1 to 11, **characterised in that** each central computer (101, 103) has its own power supply, advantageously with an energy storage.

13. Automation system according to any one of claims 1 to 12, **characterised in that** a central computer (101, 103) is supplied with energy via an inductive power supply.

14. Automation system according to any one of claims 2 to 13, **characterised in that** one of gateway computer or the gateway computers (111, 112, 113, 114, 115) is/are replicated.

15. Automation system according to any one of claims 1 to 14, **characterised in that** the content of the messages transmitted wirelessly in the automation system is cryptically encrypted.

## Revendications

1. Système d'automatisation tolérant les défaillances et pouvant être entretenu, comprenant au moins deux ordinateurs centraux (101, 103) et une périphérie de processus, de préférence distante, les ordinateurs centraux (101, 103) étant agencés pour communiquer avec et/ou contrôler la périphérie de processus, les ordinateurs centraux (101, 103) étant des *unités de confinement des défaillances* à tolérance de défaillances et constituant des *unités d'échange autonomes,*
dans lequel l'un dedits au moins deux ordinateurs centraux assume le rôle d'un *ordinateur central actif* et au moins un autre ordinateur central dedits au moins deux ordinateurs centraux assume le rôle d'un *ordinateur central passif,*
et l'ordinateur central actif assurant la communication avec la périphérie du processus ou le contrôle de la périphérie du processus,
dans lequel l'ordinateur central actif et la périphérie du processus échangent des *messages d'état commandés par le temps* par l'intermédiaire de canaux de communication, de préférence sans fil, en particulier par des *canaux de communication locaux sans fil,* et au moins l'ordinateur central actif mémorise l*'état actuel* de la périphérie du processus,
et dans lequel l'ordinateur central actif envoie, de préférence *périodiquement,* un *message de signe de vie* à l'ordinateur central passif,
et dans lequel l'ordinateur central passif reconnaît *l'arrivée d'un message de signe de vie* provenant de l'ordinateur central actif dans un *message de signe de vie* (131) périodique et le surveille par un *time-out,* et dans lequel l'ordinateur central passif *prend le rôle de l'ordinateur central actif* en cas de *l'absence de ces messages de signe de vie* après le *time-out,*
**caractérisé en ce que**
l'ordinateur central défaillant, précédemment actif, *essaie de redémarrer de manière autonome* et, après un redémarrage réussi, surveille le trafic de messages au sein d'un cluster, lequel cluster comprend les ordinateurs centraux, afin de connaître l'état actuel du cluster, et dans lequel il prend le *rôle de l'ordinateur central passif* et informe *l'ordinateur central désormais actif par des messages de signes de vie, de préférence périodiques,* qu'il joue le rôle de l'ordinateur central passif, et dans lequel, si le redémarrage échoue, l'ordinateur central défaillant est adapté pour indiquer une erreur permanente, par exemple au moyen d'un moyen indicateur, par exemple sous la forme d'une lampe de contrôle (102, 104).

2. Système d'automatisation tolérant les défaillances et pouvant être entretenu, comprenant au moins deux ordinateurs centraux (101, 103) et une périphérie de processus, de préférence distante, ainsi qu'un ou plusieurs ordinateurs passerelles (111, 112, 113, 114, 115), en particulier une pluralité d'ordinateurs passerelles, les ordinateurs centraux (101, 103) étant des *unités de confinement des défaillances* silencieuses de défaillances et constituant des *unités d'échange autonomes,* et
ledit un ou lesdits plusieurs ordinateurs passerelles, en particulier la pluralité d'ordinateurs passerelles (111, 112, 113, 114, 115) étant des *unités de confinement des défaillances* silencieuses de défaillances et constituant des *unités d'échange autonomes,* où
l'ordinateur central (101, 103) et ledit ou lesdits ordinateur(s) passerelle(s) (111,112, 113, 114, 115) échangent des *messages d'état commandés par le temps* par l'intermédiaire de canaux de communication, de préférence par des canaux de communication sans fil, en particulier des *canaux de communication sans fil locaux,* et dans lequel chaque ordinateur passerelle établit la connexion avec la périphérie de processus attribuée à l'ordinateur passerelle et mémorise l*'état actuel* de la périphérie de processus attribuée à l'ordinateur passerelle, et
dans lequel l'un des au moins deux ordinateurs centraux assume le rôle d'un *ordinateur central actif* et au moins un autre ordinateur central des au moins deux ordinateurs centraux assume le rôle d'un *ordinateur central passif,* et dans lequel
l'ordinateur central actif assure le contrôle sur ledit ou lesdits ordinateur(s) passerelle(s),
et dans lequel l'ordinateur central actif envoie, de préférence *périodiquement,* un *message de signe de vie* à l'ordinateur central passif,
et dans lequel l'ordinateur central passif reconnaît *l'arrivée d'un message de signe de vie* provenant de l'ordinateur central actif dans un *message de signe de vie* (131) périodique et le surveille par un *time-out,* et dans lequel l'ordinateur central passif *prend le rôle de l'ordinateur central actif* en case de *l'absence de ces messages de signe de vie* après le *time-out,*
**caractérisé en ce que**
l'ordinateur central défaillant, précédemment actif, *essaie de redémarrer de manière autonome* et, après un redémarrage réussi, surveille le trafic de messages au sein d'un cluster, lequel cluster contient les ordinateurs centraux et ledit ou lesdits ordinateur(s) passerelle(s) afin de connaître l'état actuel du cluster, et dans lequel il prend le *rôle de l'ordinateur central passif* et informe *l'ordinateur central maintenant désormais actif par des messages de signe de vie, de préférence périodiques,* qu'il joue le rôle de l'ordinateur central passif, et dans lequel, si le redémarrage est infructueux, l'ordinateur central défaillant est adapté pour indiquer une erreur permanente, par exemple au moyen d'un moyen d'indication, par exemple sous la forme d'une lampe de contrôle (102, 104).

3. Système d'automatisation selon la revendication 1 ou 2, **caractérisé en ce qu'**un ordinateur central (101, 103) est agencé pour surveiller, après la mise sous tension, le trafic de messages au sein du cluster afin d'apprendre un *identificateur de cluster,* dans lequel ensuite un état d'initialisation associé à l'identificateur de cluster est chargé à partir d'un *nuage* ou d'un support de stockage, et dans lequel, après le démarrage réussi du, de préférence nouvel, ordinateur central l'identificateur de cluster, le trafic de messages au sein du cluster est observé afin de connaître l'état actuel du cluster et où le nouvel ordinateur central prend désormais le *rôle de l'ordinateur central passif* et informe *l'ordinateur central actif* par un *message de signe de vie périodique* qu'il prendra désormais le rôle de l'ordinateur central passif.

4. Système d'automatisation selon l'une quelconque des revendications 1 à 3, **caractérisé en ce que** l'ordinateur central (101, 103) et/ou ledit ou lesdits ordinateur(s) passerelle(s) (111,112, 113, 114, 115) ont accès à une heure globale.

5. Système d'automatisation selon l'une quelconque des revendications 1 à 4, **caractérisé en ce que** l'ordinateur central qui reprend le rôle de l'ordinateur central actif après le time-out prend le contrôle de la périphérie du processus ou ledit ou lesdits ordinateur(s) passerelle(s).

6. Système d'automatisation selon l'une quelconque des revendications 1 à 5, **caractérisé en ce qu'**une identification unique de l'ordinateur central émetteur est contenue dans les messages de signe de vie de l'ordinateur central (101, 103).

7. Système d'automatisation selon l'une quelconque des revendications 1 à 6, **caractérisé en ce que** lorsque les au moins deux ordinateurs centraux (101, 103) des ordinateurs centraux sont mis sous tension simultanément, l'ordinateur central avec l'identifiant le plus petit prend le rôle de l'ordinateur central actif .

8. Système d'automatisation selon l'une quelconque des revendications 2 à 7, **caractérisé en ce que** dans la charge utile des *messages interne au cluster* d'un ordinateur passerelle (111, 112,113, 114, 115) à l'ordinateur central (101, 103) un champ de données avec un *identifiant unique de l'identité du cluster* existe.

9. Système d'automatisation selon l'une quelconque des revendications 1 à 8, **caractérisé en ce qu'**un ordinateur central échange des messages avec son environnement dans le cluster, c'est-à-dire au moins avec ledit au moins un autre ordinateur central et/ou au moins avec ledit ou lesdits ordinateur(s) passerelle(s) (111, 112, 113, 114, 115), via un système de communication Bluetooth.

10. Système d'automatisation selon l'une quelconque des revendications 1 à 9, **caractérisé en ce qu'**un ordinateur central échange des messages avec son environnement dans le cluster, c'est-à-dire au moins avec ledit au moins un autre ordinateur central et/ou au moins avec ledit ou lesdits ordinateur(s) passerelle(s) (111, 112, 113, 114, 115), via un système de communication WiFi.

11. Système d'automatisation selon l'une quelconque des revendications 1 à 10, **caractérisé en ce qu'**un ordinateur central échange des messages avec son environnement dans le cluster, c'est-à-dire au moins avec ledit au moins un autre ordinateur central et/ou au moins avec ledit ou lesdits ordinateur(s) passerelle(s) (111, 112, 113, 114, 115), via un système de communication ZigBee.

12. Système d'automatisation selon l'une quelconque des revendications 1 à 11, **caractérisé en ce que** chaque ordinateur central (101, 103) dispose de sa propre alimentation électrique, avantageusement avec un stockage d'énergie.

13. Système d'automatisation selon l'une quelconque des revendications 1 à 12, **caractérisé en ce qu'**un ordinateur central (101, 103) est alimenté en énergie via une alimentation électrique inductive.

14. Système d'automatisation selon l'une quelconque des revendications 2 à 13, **caractérisé en ce qu'**un ou les ordinateurs passerelles (111, 112, 113, 114, 115) est/sont répliqués.

15. Système d'automatisation selon l'une quelconque des revendications 1 à 14, **caractérisé en ce que** le contenu des messages transmis sans fil dans le système d'automatisation est crypté.
